# EUROPEAN PATENT APPLICATION

(11) **EP 1 401 145 A2**
(43) Date of publication of application: **24.03.2004**
(21) Application number: 03254569.1
(22) Date of filing: 22.07.2003
(51) Int. Cl.: H04L 12/24

(54) **Supervisory system, method and a program used therein**

(30) Priority: 24.07.2002 JP 2002214627
(71) Applicant: NEC Corporation, Minato-ku, Tokyo 108-8001 (JP)
(72) Inventor: Ochi, Yumiko NEC Corporation, Tokyo 108-8001 (JP)
(74) Representative: Robson, Aidan John

(57) **Abstract**

In order to obtain a supervisory system that can send event information of an object system from a server to a client, the client is downloaded from the server with a program that issues a POST request to the server. After the POST request is received from the client, the server transmits the event information to the client in the form of a POST reply, if the event information is kept or present in the server.

## Description

### Background of the Invention:

This invention relates to a supervisory system, method, and a program.

Heretofore, a supervisory system of the type described has each supervisory server and a plurality of client personal computers (PCs) both of which are connected through a network, for example, an internet. With such a supervisory system, each client makes access to each supervisory server by the use of a WEB browser available for a home page on the internet while each supervisory server provides various supervised information or data to the client in the form of a HTML (Hyper Text Markup Language) file or the like. Herein, it is to be noted that the supervisory information is representative of occurrence or not of a supervised event and that the supervised event may be, for example, a failure or a fault caused to occur in an object supervised system (simply called an object system).

Such a supervisory system has been disclosed in Japanese Unexamined Patent Publication No. Hei 10-333940, namely, 333940/1998 (will be called the first reference below) and Japanese Unexamined Patent Publication No. Hei 11-110311, namely, 110311/1999 (will be called the second reference below).

Specifically, a supervisory system disclosed in the first reference has a server for transmitting supervisory information and a user (client) terminal for displaying the supervisory information, such as failure information, in a flickering manner to alert the user. To this end, the server implements, on a data base, a Java (Registered Trade Mark abbreviated to TM) program for providing the above-mentioned service. Such a Java program is described as a Java Applet that is included in a HTML file and that is executable by the use of a WEB browser corresponding to the Java Applet.

With this supervisory system, when a supervised event takes place in an object to be supervised, the server updates the data base and transfers, to the WEB browser, an event file specified by the HTML file including the Java program. The Java program is executed by the WEB browser of the client to display the supervisory information in the flickering manner and to alert the client or user.

The second reference also discloses a similar supervisory system for remotely controlling a server control device from a client control device. In the second reference, when the client control device issues a transfer request of a home page file to the server control device, the server control device transfers a file including a script for generating a transfer request of a Java Applet that enables automatic reception.

Responsive to the above-mentioned file, the client control device transfers the transfer request of the Java Applet to the server control device. Supplied with the transfer request, the server control device transmits the Java Applet to the client control device. When the Java Applet sent to the client control device issues a transfer request of status information to the server control device, an image of a camera coupled to the server control device is transferred to the client control device only when an event occurs such that a camera angle is changed.

The above-mentioned supervisory system is very significant so as to formulate an expensive and reliable system because of using a general-purpose technique, such as WEB computing technique.

Herein, it is to be noted in such a supervisory system that, when an unusual state occurs in an object to be supervised, such occurrence of an unusual state must be quickly processed. This shows that occurrence of the unusual state should be displayed in the form of an alarm in real time. For this purpose, it is assumed that a HTTP (Hyper Text Transfer Protocol) is used as a communication protocol between a browser and a supervisory server. In this event, since the HTTP is a protocol of a request-response type, the supervisory server never sends any response to the browser as long as no request is issued from the client to the supervisory server. From this fact, it is readily understood that the supervisory server can not inform the client of occurrence of an event at voluntary timing. Stated otherwise, an alarm can not be transmitted from the supervisory server to the client in real time.

Thus, no consideration is made at all in conventional supervisory systems like in the first and the second references about quickly transferring an alarm indicative of occurrence of an unusual state, such as a failure or a fault in the object to be supervised.

Furthermore, let usual Java RMI (Remote Method Invocation) communication be carried out by the use of the Java Applet between a client and a server. In this event, ports except the standard port (#80) of the HTTP should be released, which brings about diminishing security.

Moreover, the first and the second references never consider about occurrence of a burst-like failure. Such a burst-like or a burst-type failure may occur, for example, in a marine optical fiber system which includes terminal stations connected to each other through repeaters and an optical fiber. In general, each terminal station includes various kinds of equipment of facilities used for light transmission. If a failure takes place in either the repeaters or the optical fiber, the failure is spread or continued like a burst into the various facilities of each terminal station.

Herein, it is assumed that a supervisory server as mentioned in the first and the second references is used for supervising each terminal station. In the first and the second references, supervisory information or status information is transmitted one by one each time when a single event takes place. Taking this into account, it is readily understood that the first and the second references cannot cope with the burst-like failure. In addition, congestion of the supervisory information is inevitably caused to occur on a transmission path.

### Summary of the Invention

A supervisory server according to a first aspect of this invention is for transferring, to a client device, supervisory information that is given through a network from an object to be supervised and that includes a notice of a status change. The supervisory server comprises means operable in response to a request from the client device, for making the client device download a file that is available by a WEB browser and that incorporates a program, holding means for holding the supervisory information until a request of transmitting the supervisory information is issued from the program incorporated in the downloaded file, and transmitting means for transmitting the supervisory information to the client device after reception of the request of transmitting the supervisory information, either when a status change is caused to occur in the object or when the supervisory information is held in the holding means.

According to a second aspect of this invention, the supervisory server further comprises means for carrying out reception processing of the supervisory information. The transmitting means transmits the supervisory information to the client device which generates the file available by the WEB browser with reference to information obtained by the reception processing.

According to a third aspect of this invention, the supervisory information includes an alarm sent from the object to be supervised.

According to a fourth aspect of this invention, the supervisory server is communicable with the client device in accordance with HTTP (Hyper Text Transfer Protocol).

According to a fifth aspect of this invention, the supervisory server is connected to the client device through a repeater server that is located between the supervisory server and the client device and that is operable to repeat communication between the supervisory server and the client device.

According to a sixth aspect of this invention, a supervisory system comprises a server and a client device. The server is operable in response to supervisory information that is sent from an object to be supervised and that includes a notice of a continuous status change and transfers the supervisory information to the client device through a network. The server comprises means operable in response to a request from the client device, for making the client device download a file that is available by a WEB browser and that incorporates a program, holding means for holding the supervisory information until a request of transmitting the supervisory information is issued from the program incorporated in the downloaded file, and transmitting means for transmitting the supervisory information to the client device after reception of the request of transmitting the supervisory information, either when a status change is caused to occur in the object or when the supervisory information is held in the holding means.

According to a seventh aspect of this invention, a method is for use in a supervisory system to transfer, from a server to a client device through a network, occurrence of an event caused to occur in an object. The method is for giving an event notice indicative of the occurrence of the event from the server to the client device and comprises the steps of downloading, from the server to the client device, a file which is available by a WEB browser and which incorporates a program, holding the event notice in the server until an event request related to the event is issued from the program downloaded into the client device and is received by the server, and transmitting the event notice from the server to the client device after reception of the event request by the server either when any change is caused to occur in the object system or when the event is held in the server.

According to an eighth aspect of this invention, a computer-readable program is for use in an event notifying method of a supervisory system. The supervisory system is for transferring, from a server to a client device through a network, an event caused to occur in an object to be supervised. The computer-readable program is for making a computer in the server execute the steps of making the client device download a predetermined program that is incorporated in a file, that is available by a WEB browser, and that issues an event request, holding the event caused to occur in the object until the event request is received from the predetermined program downloaded in the client device, and transmitting the held event after reception of the event request.

### Brief Description of the Drawing:

Fig. 1 shows a block diagram for use in a supervisory system according to a first embodiment of this invention;
Fig. 2 shows a flow chart for use in describing operation of the supervisory system illustrated in Fig. 1;
Fig. 3. shows a block diagram for use in a supervisory system according to a second embodiment of this invention;
Fig. 4 shows a block diagram for use in a supervisory system according to a third embodiment of this invention;
Fig. 5 shows a flow chart for use in describing operation of a supervisory system according to a fourth embodiment of this invention; and
Fig. 6 shows a diagrammatic view of a marine optical network to which this invention is applicable and wherein a burst-like event takes place.

### Description of the Preferred Embodiments:

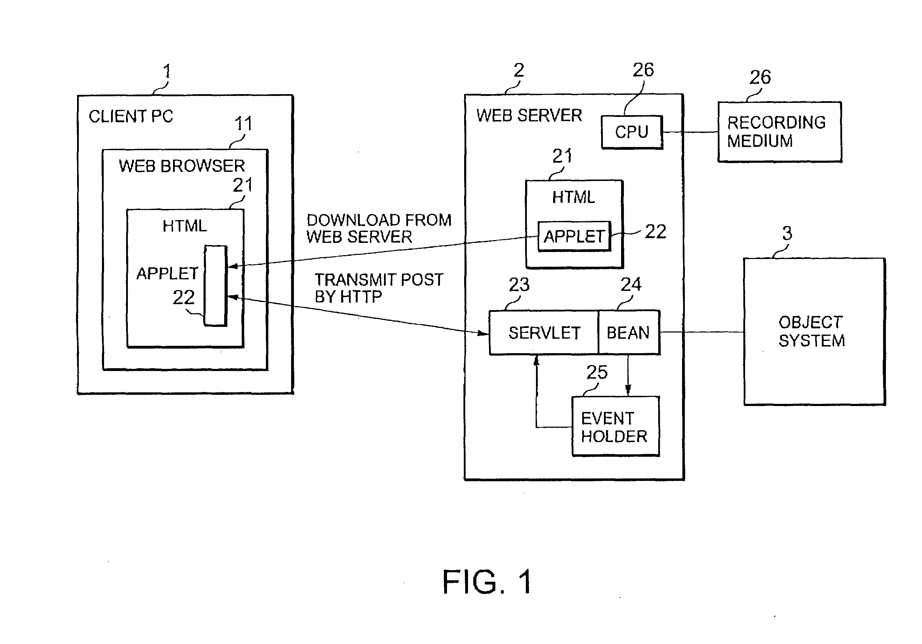

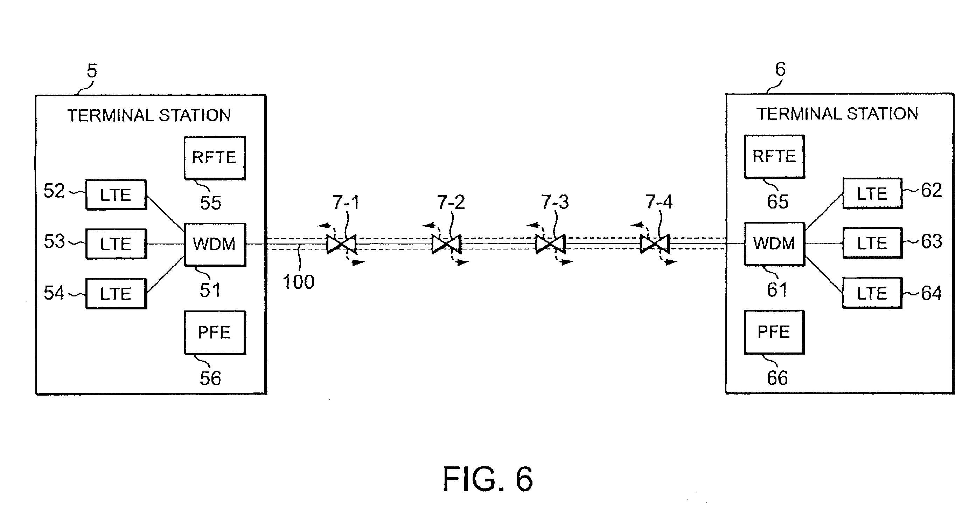

Referring to Fig. 1, a supervisory system according to a first embodiment of this invention is structured by a client personal computer (abbreviated to PC) 1 and a WEB server 2 and is coupled to an object system or an simple object 3 to be supervised by the supervisory system, although the following description will be directed to the object system alone. Herein, it is assumed that the illustrated client PC 1 which may be called a client device implements a WEB browser 11 for displaying HTML (Hyper Text Markup Language) files. In addition, the object system may be, for example, a terminal station of a marine optical network that will be described later with reference to Fig. 6 and that causes a burst-like event or failure to occur.

As shown in Fig. 1, the WEB server 2 implements a specific HTML file 21 that includes a specific program 22 and which may be simply often referred to specific HTML 21. The specific program 22 will be described as a Java Applet formed by a Java program hereinafter. At any rate, the Java Applet 22 can be executed on the WEB browser 11 corresponding to Java.

The illustrated client PC 1 is downloaded by the use of the WEB browser 11 from the WEB server 2 with the specific HTML 21 together with the Java Applet 22.

The WEB server 2 also implements a Servlet (namely, Java Servlet) 23 and Java Bean or Beans (simply called Bean) 24 and has an event holder 25 cooperating with the Servlet 23 and the Bean 24 for monitoring or supervising the object system 3. In the illustrated example, a recording medium 26 is attached to the WEB server 2 but may be included in the WEB server 2.

The WEB server 2 is operated by an internal computer 26 in accordance with a program stored in the recording medium 26 and can freely make the client PC 1 download the HTML 21 along with the Applet 21. The downloaded HTML 21 is displayed by the WEB browser 11 on the client PC 1 and incorporates the Applet 21.

Under the circumstances, the client PC 1 transmits a POST request by the use of the Applet 22 to the WEB server 2,

The POST request may be a usual transmission request or a POST request defined in the Applet and is received by the Servlet 23 of the WEB server 2. Herein, the Servlet 23 may be defined as a Java program module executed on the side of the WEB server 2 in response to a request of each client. The illustrated Servlet 23 is operated to send a POST reply back to the client PC 1 in response to the POST request. At any rate, it is to be noted that each of the POST request and the POST reply has no identification code (ID).

In addition, the Servlet 23 also serves to generate HTML information on the basis of information received from the Bean 24 and event information held by the event holder 25. The event information may be indicative of a burst-like or a burst-type event or failure that is spread over various devices and continued for a while.

The illustrated Bean 24 is used to carry out reception processing of an event notice sent from the object system 3. In addition, when the POST request is issued from the client PC 1, the Bean 24 gives the Servlet 23 information received from the object system 3. On the other hand, when no POST request is present from the client PC 1, the Bean 24 makes the event holder 25 hold the information received from the object system 3.

In this case, the event holder 25 serves to hold a notice which is indicative of occurrence of the event sent from the object system 3 and which may be called an event notice. The event holder 25 may be placed independently of the Servlet 23 and the Bean 24, as shown in Fig. 1, and may be formed in either the Servlet 23 or the Bean 24.

The object system 3 to be supervised or monitored by the illustrated supervisory system may have a single or a plurality of supervisory object unit (s) to be supervised and informs the WEB server 2 of event information, such as an alarm or alert. The object system 3 is assumed to issue a notice to the WEB server 2 in accordance with the TCP/IP (Transmission Control Protocol/ Internet Protocol) or the like.

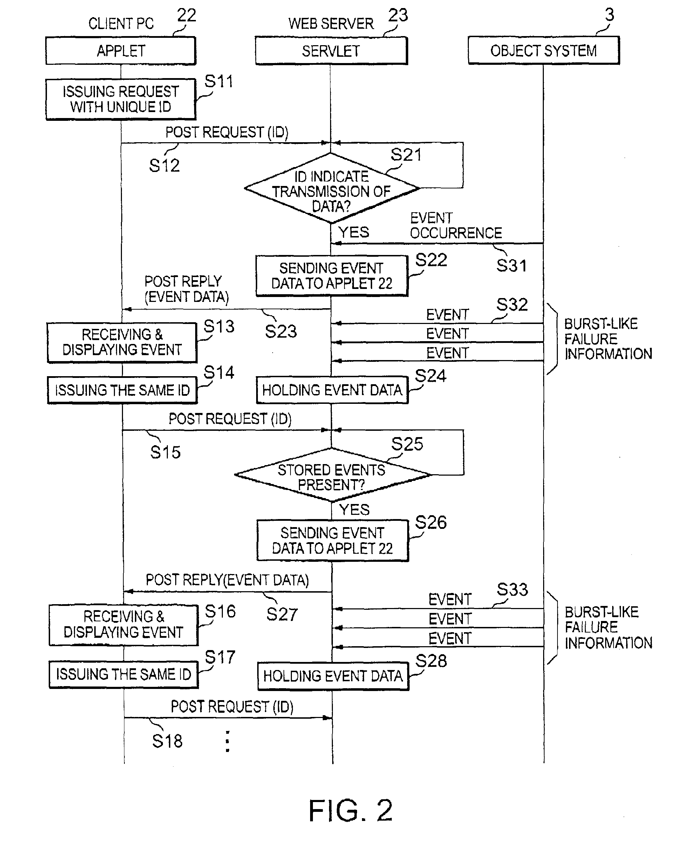

Referring to Fig. 2, description will be made about an operation of the supervisory system shown in Fig. 1. It is noted that the WEB server 2 executes the program stored in the recording medium 26 and realizes a processing sequence illustrated in Fig. 2.

It is assumed that the WEB browser 11 of the client PC 1 is started or activated by a user and the HTML 21 is downloaded to the client PC 1 from the WEB server 2. As shown in Fig. 1, the HTML 21 includes or incorporates the Applet 22 which is operable to transmit the POST request to the Servlet 23, with a unique ID (identification information) attached (S11 and S12 of Fig. 2). In the POST request, assignment of any parameter is disapproved. Therefore, a value of requesting transmission of an alarm, or a value of indicating the number of the event notice to be transmitted is assigned to the unique ID which serves as a parameter.

Responsive to the POST request from the Applet 22, the Servlet 23 judges at S21 of Fig. 2 whether or not the unique ID attached to the POST request indicates transmission or transfer of an alarm. When the transmission of the alarm is indicated by the ID, the Servlet 23 holds the POST request, without sending a POST reply back to the Applet 22 until the event information is received from the object system 3 through the Bean 24. When the event information is received from the object system 3 through the Bean 24 and is indicative of the event occurrence (S31 in Fig. 2), the Servlet 23 sends the POST reply to the Applet 22 (S22 and S23 in Fig. 2).

The Applet 22 receives the POST reply and renders a reply content into HTML information and displays a received event by the use of the WEB browser 11 (S13 of Fig. 2). Subsequently, the Applet 22 transmits the POST request to the Servlet 23 again in the above-mentioned manner (S14 and S15 of Fig. 2). The Applet 22 is formed so that the POST request is repeatedly transmitted at a predetermined time interval.

The Servlet 23 makes the event holder 25 hold the burst-like or type event received as a burst event from the Bean 24 until the POST request of the same ID is received by the Servlet 23 (S23 and S24 of Fig. 2). Herein, the same ID is assumed to be indicative of the ID for transmission of the alarm while the burst event is a notice of an alarm (namely, a status change).

Responsive to the POST request (with the same ID)(S15 of Fig. 2), the Servlet 23 judges at S25 whether or not stored or held events are present and sends event information or data back to the Applet 22 (S26 and S27 of Fig. 2), if the stored events are present. Such event information may be continuously transmitted like a burst.

When the Servlet 23 receives no event from the Bean 24, namely, when the event holder holds no event, no POST reply is returned back from the Servlet 23 to the Applet 22 until any event information is received from the object system 3. After any event information is transmitted from the object system 3, the Servlet 3 executes an operation in a manner similar to the above-mentioned operation (S16 to S18, S28, S33 of Fig. 2).

As mentioned above, the POST request issued from the Applet 22 to the Servlet 23 has the same ID as the ID indicative of the transmission of the alarm. With this structure, the Servlet 23 can judge the ID of the received POST request and executes processing, such as processing of the POST reply, which is determined by a result of the judgment.

Thus, the system according to this invention can inform the client PC 1 of an event in real time without transmitting or receiving any unnecessary packet. In addition, since the HTTP is used between the client PC 1 and the WEB server 2 and is a protocol of a request-response type, acquisition processing should be usually executed within a very short time interval. However, using the POST request and the POST reply in this invention dispenses with the acquisition processing.

Although restriction is generally imposed on the request-response type protocol about returned data, it is removed by using the POST request and the POST reply. In other words, it is possible to collectively return an alarm of a burst-type sent from the object system.

Furthermore, the system according to this embodiment does not use any other ports except the standard port (the port #80). This does not need to release any other ports in a firewall and makes it possible to apply to an internet environment with security kept.

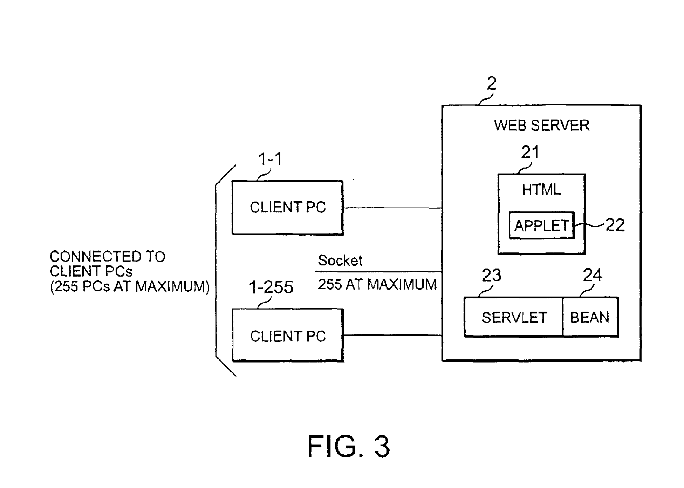

Referring to Fig. 3, a supervisory system according to a second embodiment of this invention is specified by connections between a WEB server2 and a plurality of client PCs numbered from 1 to 255. In Fig. 3, the WEB server 2 uses an OS (Operating System) of a UNIX series and limits the number of sockets that are connected to the WEB server 2 and that is equal to 255 at maximum. This means that the number of the clients PCs connected to the WEB server 2 is restricted to 255 at maximum.

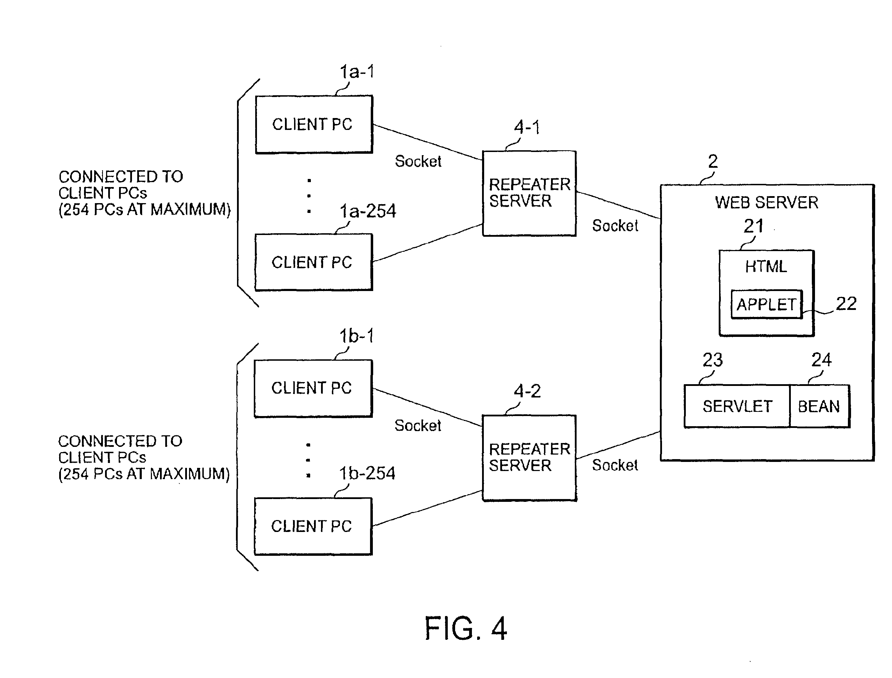

Referring to Fig. 4, a supervisory system according to a third embodiment of this invention serves to remove the restriction of the number of the client PCs connected to the WEB server 2. To this end, the supervisory system illustrated in Fig. 4 has a repeater server 4-1 between the WEB server 2 and a first group of client PCs 1a-1 to 1 a-254 and has a repeater server 4-2 between the WEB server 2 and a second group of client PCs 1b-1 to 1b-254.

Each of the repeater servers 4-1 and 4-2 is connected to the WEB server 2 through a single socket and can connect 254 client PCs (1a-1 to 1 a-254; 1b-1 to 1 b-254) in number to each socket of the WEB server 2. With this structure, a total of 508 client PCs can be connected to the WEB server 2.

At any rate, locating the repeater server or servers 4 between the client PCs and the WEB server2 serves to increase the number of the client PCs to 254 x n (n is representative of the number of the repeater servers).

In the meanwhile, it is to be noted that only 254 client PCs 1 can be connected to the WEB server 2 when a single repeater server is placed between the client PCs and the WEB server 2. This means that the number of the client PCs connected to the WEB server 2 is undesirably decreased as compared with absence of any repeater server. From this fact, it is understood that the number of the repeater servers should be equal to two or more.

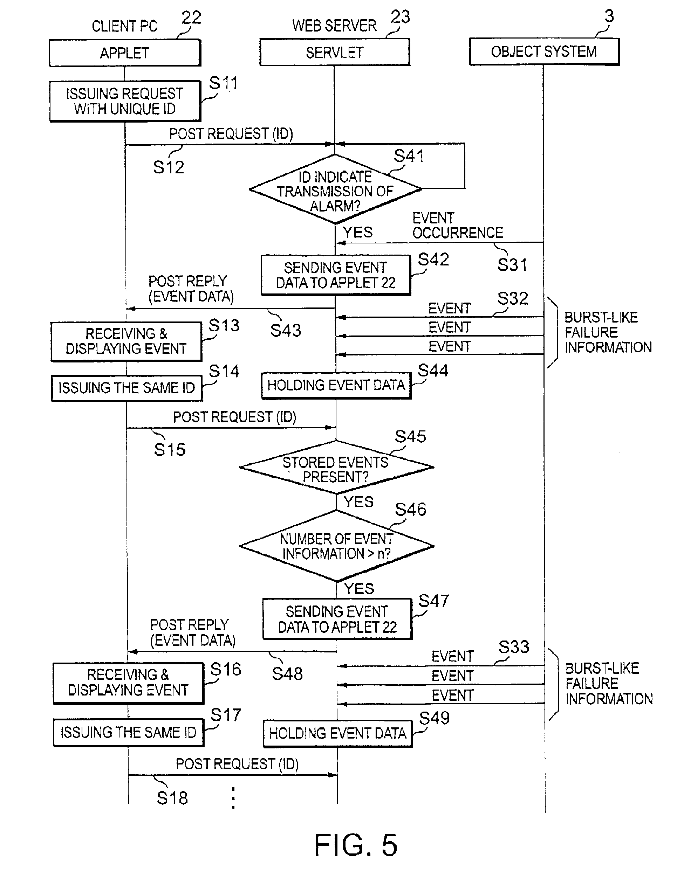

Referring to Fig. 5, description will be made about a sequence chart of an operation executed in a supervisory system according to a fourth embodiment of this invention. The supervisory system according to this embodiment is similar in structure to that illustrated in Fig. 1. Accordingly, the following description will be made with reference to both of Figs. 1 and 5. The processing of the WEB server 2 illustrated in Fig. 5 is executed by the program stored in the recording medium 26.

At first, a user boots up the WEB browser 11 of the client PC1 and then downloads the HTML 21 from the WEB server 2 to get or acquire it. As mentioned before, the HTML 21 includes the Applet 22 which transmits the POST request by the use of a unique ID (S11 and S12) to the Servlet 23. Since setting any parameter is not accepted in the POST request, a value, such as a value of requesting transmission of an alarm, a value of indicating the number of event notices to be transmitted, is assigned to the unique ID as the parameter.

Responsive to the POST request, the Servlet 23 judges whether or not the unique ID of the POST request indicates transmission of the alarm (S41 of Fig. 5). The Servlet 23 does not send back any reply to the Applet 22 until event information is received through the Bean 24 from the object system 3. If the transmission of the alarm is indicated by the unique ID (S41; Yes) and event information is received from the object system 3 as a result of occurrence of any event (S31 of Fig. 5), the Servlet 23 returns a reply to the Applet 22 (S42 and S43 of Fig. 5).

Supplied with the reply, the Applet 22 renders reply contents into HTML information and displays a received event by the use of the WEB browser 12 (S13 of Fig. 5). Thereafter, the Applet 22 transmits the POST request again in the above-mentioned manner (S14 and S15 of Fig. 5). Thus, the Applet 22 is formed so that the POST request is transmitted at a predetermined interval.

On the other hand, the Servlet 23 keeps, in the event holder 25, the event information of a burst type received from the Bean 24 (S32 and S44 of Fig. 5) until the POST request with the same ID (in this case, the ID of transmitting the alarm) is received. When the number of the event information exceeds a predetermined number n (n is an integer greater than unity) after reception of the POST request (S45 and S46 of Fig. 5), the event information is returned as the POST reply back to the Applet 22 (S47 and S48 of Fig. 5) in a burst manner.

In other words, no event information is returned back to the Applet 22 as long as the number of the event information does not exceed the predetermined number n. When the predetermined number n is equal to unity, the supervisory system illustrated in Fig. 5 is similar in operation to the previous embodiment.

While the Servlet 23 does not receive any event from the Bean 24, namely, no event is kept in the event holder 25, no POST reply is returned back to the Applet 22 from the Servlet 3 until event information is received from the object system 3. Supplied with any event information from the object system 3, the Servlet 23 executes an operation similar to that mentioned above (S16 to S18, S28, S33 of Fig. 5).

The POST request from the Applet 22 to the Servlet 23 is assumed to have the same ID as the ID of transmitting the alarm or the ID which includes the predetermined number n and which indicates transmission of the alarm. With this structure, it is possible to judge the ID of the received POST request and to execute processing in accordance with a result of judgment, such as processing about the POST reply.

Thus, this embodiment makes it possible to notify the client PC 1 of an event in real time, without transmitting or receiving any unnecessary packets.

Since the HTTP used between the client PC 1 and the WEB server 2 is a protocol of a request response type, acquisition processing should be usually executed within a very short time so as to receive a notification from the WEB server 2. However, this embodiment dispenses with such acquisition processing by using the POST request and the POST reply.

Referring to Fig. 6, a marine optical network to which this invention is applicable has terminal stations 5 and 6 both of which are connected to each other through an optical fiber 100 and repeaters 7-1, 7-2, 7-3, 7-4 set or laid on bottom of an ocean. Each of the terminal stations 5 and 6 has WDM (Wavelength Division Multiplexers) 51; 61, LTE (Line Terminating Equipment) 52 to 54; 62 to 64, RFTE (Remote Fiber Test Equipment) 55; 65, and PFE (Power Feeding Equipment) 56; 66.

The marine optical fiber network has the terminal stations 5 and 6 connected through the repeaters 7-1 to 7-4 and the optical fiber 100, let any failure be caused to occur in either one of the repeaters 7-1 to 7-4 and the optical fiber 100. In this case, burst-like failure information takes place from the terminal stations 5 and 6, the repeaters 7-1 to 7-4, the WDM 51, 61, the LTE 52 to 54; 62 to 64; the RFTE 55; 65, and the PFE 56; 66.

When the LTE 52 to 54; 62 to 64 are supervised by the WEB server 2 illustrated in Fig. 1, the failure is spread from the optical fiber 100 or the repeater to any other various equipment or facilities like a burst and may therefore be called a burst-like event or failure.

However, even if such burst-like failure information takes place in the above-mentioned embodiments according to this invention, the burst-like failure information can be collectively transmitted to the client PC 1 in one piece by the use of the POST reply in this invention. Therefore, this invention can cope with occurrence of the burst-like failure information.

It is to be noted that this invention has not been restricted to the marine optical fiber network but can be applied to a land optical fiber network, any other transmission system, or any other object system.

While this invention has thus far been described in conjunction with a few embodiments thereof, it will be readily possible for those skilled in the art to put this invention into practice in various other manners. At any rate, when an object system issues an event that occurs in an object system and that includes a notice of a burst like status change, the server at first make the client device download the program available by the WEB browser in the client PC 1. Thereafter, the server keeps the event including the notice of a burst like status change until an event request is issued from the program of the client PC 1. After the event request is sent from the program of the client PC 1, the server transmits the event to the client PC 1 when a status change is caused to occur in the object system or when any event is kept in the server. With this structure, the server can notify the client of occurrence of an event including a burst like event in real time without declining security.

## Claims

1. A supervisory server for transferring, to a client device, supervisory information that is given through a network from an object to be supervised and that includes a notice of a status change, comprising:
means operable in response to a request from the client device, for making the client device download a file that is available by a WEB browser and that incorporates a program;
holding means for holding the supervisory information until a request of transmitting the supervisory information is issued from the program incorporated in the downloaded file; and
transmitting means for transmitting the supervisory information to the client device after reception of the request of transmitting the supervisory information, either when the status change is caused to occur in the object or when the supervisory information is held in the holding means.

2. A supervisory server as claimed in claim 1, further comprising:
means for carrying out reception processing of the supervisory information;
the transmitting means for transmitting the supervisory information to the client device being for generating the file available by the WEB browser with reference to information obtained by the reception processing.

3. A supervisory server as claimed in claim 2, wherein the supervisory information includes an alarm sent from the object system.

4. A supervisory server as claimed in claim 1, communicable with the client device in accordance with HTTP (Hyper Text Transfer Protocol).

5. A supervisory server as claimed in claim 1, connected to the client device through a repeater server that is located between the supervisory server and the client device and that is operable to repeat communication between the supervisory server and the client device.

6. A supervisory system comprising a server and a client device, the server operating in response to supervisory information that is sent from an object system to be supervised and that includes a notice of a continuous status change and transferring the supervisory information to the client device through a network,
the server comprising:
means operable in response to a request from the client device, for making the client device download a file that is available by a WEB browser and that incorporates a program;
holding means for holding the supervisory information until a request of transmitting the supervisory information is issued from the program incorporated in the downloaded file; and
transmitting means for transmitting the supervisory information to the client device after reception of the request of transmitting the supervisory information, either when a status change is caused to occur in the object system or when the supervisory information is held in the holding means.

7. A supervisory system as claimed in claim 6, wherein the server comprising:
means for carrying out reception processing of the supervisory information;
the transmitting means for transmitting the supervisory information to the client device generating a file available by the WEB browser from information obtained by the reception processing.

8. A supervisory system as claimed in claim 6, wherein the supervisory information includes at least an alarm generated by the object system.

9. A supervisory system as claimed in claim 6, wherein the client device and the server carries out communication between them in accordance with HTTP (Hyper Text Transfer Protocol).

10. A supervisory system as claimed in claim 6, further comprising:
a repeater server for repeating communication between the client device and the server.

11. A method for use in a supervisory system to transfer, from a server to a client device through a network, occurrence of an event caused to occur in an object system, the method being for giving an event notice indicative of the occurrence of the event from the server to the client device and comprising the steps of:
downloading, from the server to the client device, a file which is available by a WEB browser and which incorporates a program;
holding the event notice in the server until an event request related to the event is issued from the program downloaded into the client device and is received by the server; and
transmitting the event notice from the server to the client device after reception of the event request by the server either when any change is caused to occur in the object system or when the event is held in the server.

12. A method as claimed in claim 11, further comprising the step of:
carrying out reception processing of a notice of the event in the server; and
generating a file available by the WEB browser from information obtained by the reception processing.

13. A method as claimed in claim 11, wherein the event includes at least an alarm sent from the object system.

14. A method as claimed in claim 11, wherein communication is carried out between the server and the client device in accordance with HTTP (Hyper Text Transfer Protocol).

15. A method as claimed in claim 11, wherein the supervisory system comprises a repeater server between the server and the client device to repeat communication therebetween.

16. A computer-readable program for use in an event notifying method of a supervisory system, the supervisory system being for transferring, from a server to a client device through a network, an event caused to occur in an object to be supervised, the computer-readable program being for making a computer in the server execute the steps of:
making the client device download a predetermined program that is incorporated in a file, that is available by a WEB browser, and that issues an event request;
holding the event caused to occur in the object until the event request is received from the predetermined program downloaded in the client device; and
transmitting the held event after reception of the event request.

17. A supervisory server for transferring, to a client device, supervisory information that is given through a network from an object to be supervised and that is indicative of a burst-like event, comprising:
means operable in response to a request from the client device;
holding means for holding the supervisory information until a request of transmitting the supervisory information is issued from the program and received by the supervisory server; and
transmitting means for continuously transmitting the supervisory information to the client device in a burst manner in the form of a reply to the request after reception of the request of transmitting the supervisory information.

18. A supervisory server as claimed in claim 17, wherein each of the request and the reply is specified by a value attached to each of the request and the reply.
